# EUROPÄISCHE PATENTSCHRIFT

(11) **EP 1 474 907 B1**
(45) Veröffentlichungstag und Bekanntmachung des Hinweises auf die Patenterteilung: **26.10.2016**
(21) Anmeldenummer: 03704280.1
(22) Anmeldetag: 03.02.2003
(51) Int. Cl.: H04M 1/247, H04M 3/42

(54) **VERFAHREN UND SYSTEM ZUR FLEXIBLEN DEFINITION GRAPHISCHER INFORMATIONEN AN KOMMUNIKATIONSENDGERÄTEN**
METHOD AND SYSTEM FOR THE FLEXIBLE DEFINITION OF GRAPHIC INFORMATION ON COMMUNICATION TERMINALS
PROCEDE ET SYSTEME POUR LA DEFINITION FLEXIBLE D'INFORMATIONS GRAPHIQUES SUR DES TERMINAUX DE TELECOMMUNICATION

(30) Priorität: 11.02.2002 DE 10205576
(43) Veröffentlichungstag der Anmeldung: 10.11.2004
(73) Patentinhaber: Unify GmbH & Co. KG, 80807 München (DE)
(72) Erfinder: WILLE, Klaus, 81679 München (DE); SCHAADE, Stephan, 86807 Buchloe (DE); WIESERNER, Gerhard, 90489 Nürnberg (DE)
(74) Vertreter: Fritzsche, Thomas
(86) Internationale Anmeldenummer: PCT/DE2003/000300
(87) Internationale Veröffentlichungsnummer: WO 2003/069876

(56) Entgegenhaltungen:
- EP-A- 0 365 200
- EP-A- 0 768 784
- EP-A- 0 848 528
- EP-A- 1 109 384
- DE-A- 19 523 537

## Beschreibung

Die Erfindung betrifft ein Verfahren und ein System für eine flexible Definition graphischer Informationen an stationären Kommunikationsendgeräten.

Eine Kennzeichnung elektronischer Geräte in Form von Waren- oder Markenzeichen, Firmenlogi usw. - im folgenden vereinfachend mit dem Begriff graphische Information benannt - unterstützt eine Identifizierung eines elektronischen Geräts mit der Herstellerfirma dieses Geräts. Eine derartige Kennzeichnung erfolgt meist mit Hilfe drucktechnischer oder prägender Aufbringung auf einem das elektronische Gerät umgebenden Gehäuse.

Mit einer gegenwärtig stattfindenden marktwirtschaftlichen Dynamik bei einer Vermarktung von elektronischen Geräten, insbesondere Kommunikationsendgeräten, entsteht oftmals das Bedürfnis, die graphische Information nach bereits erfolgter Auslieferung an einen Kunden zu ändern oder diese überhaupt erst nach Auslieferung aufzubringen.

Im Falle von mit Kommunikationsendgeräten ausgestatteten Räumen einer Organisation - beispielsweise einer Firma, einer Behörde oder eines Hotels - besteht oftmals ein Anliegen, diese Kommunikationsendgeräte mit einer die Organisation identifizierenden graphischen Information - anstatt oder zusätzlich zu der graphischen Information des Herstellers - auszustatten. Einem derartigen Kundenwunsch kann mit den oben beschriebenen Techniken zur Aufbringung der graphischen Information aus wirtschaftlichen Gründen nur entsprochen werden, wenn die Organisation eine bestimmte Mindestzahl an Kommunikationsendgeräten bestellt.

Eine weitere Limitierung festaufgebrachter grafischer Informationen auf elektronischen Geräten betrifft eine Herstellung elektronischer Geräte eines OEM ("Original Equipment Manufacturer") für einen Zwischenhändler, dessen Logo statt des Logos des OEM aufgebracht werden soll. Bei festaufgebrachten graphischen Informationen ist also bei der Gehäusegestaltung zu berücksichtigen, an welchen Zwischenhändler das fertige Gerät ausgeliefert werden soll. Dies bedeutet einen nicht unerheblichen logistischen Aufwand seitens des OEM und ist aus den gleichen Gründen wie oben nur bei Abnahme einer bestimmten Mindestzahl für den Hersteller wirtschaftlich durchführbar.

In der Deutschen Offenlegungsschrift DE 195 23 537 A1 ist ein Verfahren zur Steuerung von Leistungsmerkmalen einer Vermittlungsstelle offenbart, demgemäß die möglichen Leistungsmerkmale einem Teilnehmer über sein Endgerät graphisch angezeigt werden. Die technische Lehre des Dokuments beschränkt sich somit auf die Anzeige von Informationen, die im Zusammenhang mit Leistungsmerkmalen eines Telefoniedienstes stehen.

Aus der Europäischen Patentanmeldung EP 1 109 384 A2 ist ein interaktives Telefonsystem bekannt, bei dem das Kommunikationsendgerät eines Teilnehmers zur Unterstützung der Interaktion ein Display zur Anzeige von Informationen umfasst. Die technische Lehre des Dokuments beschränkt sich dabei auf die Anzeige von Informationen, die im Zusammenhang mit einer Interaktion bei einem Mehrwert-Telefoniedienst stehen.

In der US-amerikanischen Patentschrift US 5.870.156 wird eine Flüssigkristallanzeige offenbart, die über eine ansonsten transparente Folie mit nichtreflektierenden Mustern verfügt. Bei einer Rückbeleuchtung der Flüssigkristallanzeige erscheinen die nichtreflektierenden Muster als sichtbare - z.B. ein Firmenlogo enthaltende - graphische Information innerhalb des Anzeigebereichs der Flüssigkristallanzeige. Die graphische Information ist nach einer Definition auf der Folie und Montage der Flüssigkristallanzeige nicht mehr änderbar.

In dem technischen Beitrag Verhiest, J.; van Daele, K.: "Extended Use of Telephone Display Function", in: Siemens Technik Report, Jahrgang 4 Nr. 13, Oktober 2001, Seiten 69-70 ist ein Verfahren für eine erweiterte Nutzung eines Telephondisplays offenbart. Dabei werden - in bildlicher oder textueller Form dargestellte - Nachrichten, insbesondere zu Werbungszwecken, von einem Netzbetreiber an registrierte Teilnehmer verteilt. Diese Nachrichten werden temporär, z.B. während eines Rufaufbaus, angezeigt und erfordern einen externen Dienstanbieter, beispielsweise den Netzbetreiber. Dieser Netzbetreiber versorgt eine Vielzahl von Teilnehmern, die über Ihre Kommunikationsendgeräte jeweils eigenständig verfügen, diese also selbst installieren bzw. austauschen können.

Für eine dauerhafte Abbildung z.B. eines Firmenlogos ist das Verfahren daher ungeeignet.

Bei mobilen Kommunikationsendgeräten ist eine Darstellung eines Netzbetreibers, an dem das mobile Kommunikationsendgerät eingebucht ist, in Form textueller oder graphischer Informationen im Display bekannt. Der Firmenname des OEM-Zwischenhändlers ist meist auf das Gehäuse aufgeprägt bzw. aufgedruckt. Die im Display dargestellte graphische oder textuelle Information, das "Netzbetreiberlogo" wird üblicherweise auf einer Telephonkarte - dem Fachmann auch als SIM-Karte, Subscriber Identity Module bekannt - gespeichert.

In der europäischen Offenlegungsschrift EP 0896491 A1 ist ein Verfahren zur Darstellung eines Netzbetreiberlogos an mobilen Kommunikationsendgeräten offenbart, bei dem unter Verwendung einer auf einer Telephonkarte gespeicherten Information ein Displaytyp an den Netzbetreiber übermittelt wird und von diesem ein an das jeweilige Display angepasstes Netzbetreiberlogo übermittelt wird.

Aus der europäischen Offenlegungsschrift EP 0831629 A2 ist darüber hinaus ein Verfahren zur Darstellung vorhergehend gespeicherter graphischer Information in Form animierter Sequenzen bekannt.

Eine Darstellung der eingangs erwähnten graphischen Information ist mit den obigen drei Verfahren nicht durchführbar, da ein Bediener oder ein Wiederverkäufer keinen Zugriff auf die Art der - vom Netzbetreiber übermittelten und/oder auf der Telephonkarte gespeicherten - graphischen Informationen hat. Es ist weiterhin für einen Netzbetreiber technisch nicht praktikabel, graphische Informationen für verschiedene Benutzergruppen zu übertragen. Daher sind diese Verfahren aus ähnlichen Gründen wie das in dem technischen Beitrag "Extended Use of Telephone Display Function" offenbarte Verfahren nicht anwendbar.

Die EP 1 109 384 A2 offenbart ein Verfahren und ein Kommunikationssystem gemäß dem Oberbegriff des Anspruchs 1 bzw. 9.

Aufgabe der Erfindung ist es, Maßnahmen vorzusehen, durch welche eine flexible Definition graphischer Information an stationären Kommunikationsendgeräten ermöglicht werden.

Eine Lösung der Aufgabe erfolgt hinsichtlich ihres Verfahrensaspekts durch ein Verfahren mit den Merkmalen des Patentanspruchs 1 und hinsichtlich ihres Systemaspekts durch ein Kommunikationssystem mit den Merkmalen des Patentanspruchs 9.

Erfindungsgemäß werden die graphischen Informationen in einer einem stationären Kommunikationsendgerät zugeordneten Kommunikationseinrichtung bereitgestellt. Die graphischen Informationen werden an das der Kommunikationseinrichtung zugeordnete Kommunikationsendgerät übermittelt, an welchem sie an einer Ausgabeeinheit des Kommunikationsendgeräts ausgegeben werden. Die Ausgabeeinheit wird dabei in zwei Ausgabebereichen definiert. Der Zugriff auf den Inhalt des zweiten Anzeigebereichs ist dabei für einen Teilnehmer des Kommunikationsendgeräts gesperrt.

Der erste Ausgabebereich dient einer Darstellung herkömmlicher fest vorgegebener Teilnehmerinformationen, wie beispielsweise der Anzeige der Uhrzeit, des Datums, der Teilnehmernummer und/oder dem Namen eines rufenden Teilnehmers, einer Menüführung zur Unterstützung der Bedienung von Leistungsmerkmalen (z.B. "Feste Umleitung ein?") usw.

Der zweite Ausgabebereich - der im übrigen nicht räumlich vom ersten Ausgabebereich getrennt sein muss, sondern beispielsweise ein Teilbereich des ersten sein kann - dient der Darstellung graphischer Informationen, wie beispielsweise einem Firmenlogo.

Unter dem Begriff stationäres Kommunikationsendgerät wird ein drahtgebundenes oder drahtloses, von einer Kommunikationseinrichtung gesteuertes Kommunikationsendgerät verstanden.

Ein wesentlicher Vorteil des erfindungsgemäßen Verfahrens ist darin zu sehen, dass mit einer einfach zu administrierenden Maßnahme eine Definition bzw. Änderung der graphischen Informationen aller mit einer Kommunikationseinrichtung verbundenen Kommunikationenendgeräte ausführbar ist.

Vorteilhafte Weiterbildungen der Erfindung sind in den Unteransprüchen angegeben.

Besonders vorteilig ist die Steuerung vieler Kommunikationsendgeräte durch eine zentrale Kommunikationseinrichtung. Damit ist eine Definition der graphischen Information mit geringen Aufwand möglich.

Ein Ausführungsbeispiel der Erfindung wird im folgenden anhand der Zeichnung näher erläutert.

Dabei zeigt:
- Fig. 1:: ein Strukturbild zur schematischen Darstellung einer Definition graphischer Informationen auf einem stationären Kommunikationsendgerät; und;
- Fig. 2:: eine schematische Darstellung zweier Anzeigebereiche auf einer Ausgabeeinheit eines Kommunikationsendgeräts.

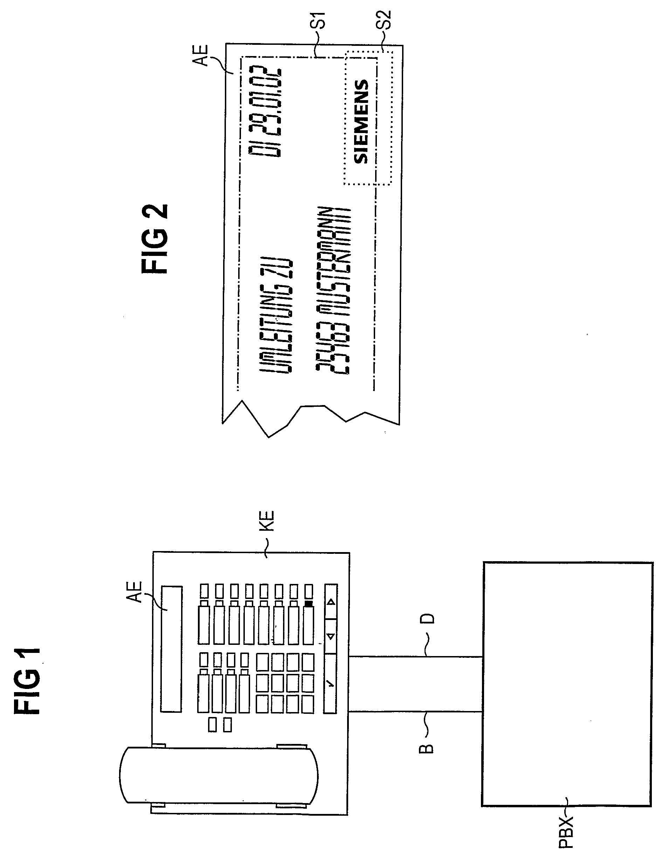

In Fig. 1 ist ein stationäres, d.h. von einer Kommunikationseinrichtung PBX gesteuertes, im übrigen drahtgebundenes oder drahtloses, Kommunikationsendgerät KE mit einer Ausgabeeinheit AE dargestellt. Das Kommunikationsendgerät KE ist mit der steuernden Kommunikationseinrichtung z.B. über einen Signalisierungsinformation übertragenden Kanal D sowie über einen Nutzinformation übertragenden Kanal B verbunden. In einem ISDN-basierten Kommunikationssystem entsprechen diese beiden Kanäle jeweils einem B-Kanal bzw. einem D-Kanal.

Die Ausgabeeinheit AE ist zur Wiedergabe graphischer Inhalte, beispielsweise als Punktmatrix - etwa in Form eines Flüssigkristalldisplays - oder auch in Form eines Bildschirms ausgestaltet.

Die - nicht dargestellte - graphische Information - beispielsweise ein Firmenlogo, welches auch als eine aus einzelnen Sequenzen bestehende "animierte" Bewegtdarstellung darstellbar ist - wird auf der Ausgabeeinheit AE dargestellt. Für diese Darstellung werden von der Kommunikationseinrichtung PBX zuvor gespeicherte, diese graphische Information repräsentierende Daten an das Kommunikationsendgerät KE übermittelt. Dort werden die Daten beispielsweise durch eine zentrale Verarbeitungseinheit des Kommunikationsendgeräts KE empfangen und in Anweisungen zur Ansteuerung der Ausgabeeinheit AE zur Darstellung der graphischen Information umgesetzt.

Für eine ressourcenschonendere Anwendung des Verfahrens werden die Daten in einer weiteren Ausführungsform in einer dem Kommunikationsendgerät KE zugeordneten Speichereinheit gespeichert und nur auf eine Anweisung der Kommunikationseinrichtung PBX durch geänderte Daten ersetzt. Damit entfällt eine ständige Übertragung von Daten für eine graphische Information, die ohnehin für die Dauer eines längeren Zeitraums im Allgemeinen keinem Wechsel unterworfen ist.

Alternativ steuert die Kommunikationseinrichtung PBX ausschließlich - ohne eine weitere Verarbeitungseinheit im Kommunikationsendgerät KE - Inhalte der Ausgabeeinheit AE. Diese Steuerungsart - unter Verwendung eines sogenannten Stimulusprotokolls - entspricht der moderner Kommunikationssysteme, bei denen nahezu die gesamte Rechenleistung - u.a. auch die Rechenleistung zur Ansteuerung und Interpretation der Tastenanreize einzelner Bedienelemente - vom Kommunikationsendgerät KE in die Kommunikationseinrichtung PBX verlagert sind. Für diese Steuerung verwendete Steuersignale werden auf dem Signalisierungsinformationen übertragenden Kanal D zwischen der Kommunikationseinrichtung PBX und dem Kommunikationsendgerät KE ausgetauscht.

Im folgenden wird unter weiterer Bezugnahme auf Funktionseinheiten der Fig. 1 der Aufbau der Ausgabeeinheit AE erläutert.

Fig. 2 zeigt die Ausgabeeinheit AE des Kommunikationsendgeräts KE mit einem ersten und einem zweiten Anzeigebereich S1;S2.

Im ersten Anzeigebereich S1 stehen herkömmliche von modernen Kommunikationseinrichtungen PBX mit deren gesteuerten Kommunikationsendgeräten KE bekannte Informationen. Aus der Zeichnung ist beispielsweise eine Datumsangabe ("Di 29.01.02") und eine vermittlungstechnische Information über eine aktivierte Umleitung zu einem anderen Teilnehmer ("Umleitung zu 25463 Mustermann") auf dem ersten Anzeigebereich S1 zu entnehmen. Der erste Anzeigebereich S1 zeigt also herkömmliche Informationen an, die - bei Verwendung eines Stimulusprotokolls für die Steuerung bzw. Kommunikation zwischen Kommunikationseinrichtung PBX und Kommunikationsendgerät KE - fest von der Kommunikationseinrichtung PBX definiert sind.

Der zweite Anzeigenbereich S2 dient zur Darstellung eines Firmenlogos. In der Zeichnung ist das Firmenlogo der Siemens Aktiengesellschaft auf der Ausgabeeinheit AE dargestellt. Der Inhalt des zweiten Anzeigebereichs S2 wird in der Kommunikationseinrichtung PBX gespeichert und zentral an alle angeschlossenen Kommunikationsendgeräte KE übermittelt. Eine Änderung dieser graphischen Information ist vorzugsweise nur durch autorisiertes Betriebstechnikpersonal der Kommunikationseinrichtung PBX möglich. Ein Zugriff auf den Inhalt des zweiten Anzeigebereichs S2 ist also im Normalfall für einen Teilnehmer des Kommunikationsendgeräts KE gesperrt.

In der Zeichnung ist die Ausgabeeinheit AE des Kommunikationsendgeräts KE in einem "Ruhezustand" - hier mit einer eingestellten Rufumleitung zu einem anderen Teilnehmer - dargestellt, das heißt in einem vermittlungstechnischen Zustand, bei dem momentan keine aktive Fernsprechverbindung besteht. Abhängig von verschiedenen vermittlungstechnischen Zuständen wie beispielsweise "Bestehende Kommunikationsverbindung mit einem anderen Teilnehmer" mit verschiedenen Unterzuständen wie beispielsweise "Einleitung einer Rückfrage" ist eine Darstellung anderer Inhalte auf dem zweiten Anzeigebereich S2 vorgesehen.

Eine solche Darstellung anderer Inhalte betrifft insbesondere den Fall, dass für einen vermittlungstechnischen Zustand wie beispielsweise einer bestehende Kommunikationsverbindung mit einem anderen Teilnehmer die Darstellung des Firmenlogos im zweiten Anzeigebereichs S2 stark verkleinert erfolgt oder auch gänzlich unterbleibt. Diese Maßnahme ist z.B. bei einer bezüglich eines Gesamtanzeigebereichs begrenzten Ausgabeeinheit AE von Vorteil, bei der eine Priorisierung der dem Bediener des Kommunikationsendgerät KE dargestellten Informationen zugunsten der - vorrangigen - Informationen des ersten Anzeigebereichs S1 zwangsläufig zu erfolgen hat. Diese Priorisierung erfolgt beispielsweise durch eine vorzugsweise in der Kommunikationseinrichtung PBX oder auch im Kommunikationsendgerät KE angeordnete - nicht dargestellte - Prioritätensteuerung als Bestandteil eines die Inhalte der beiden Anzeigebereiche S1,S2 steuernden Prozesses. Auch bei einer bezüglich des Gesamtanzeigebereichs großzügiger gestalteten Ausgabeeinheit AE kann eine derartige Priorisierung vorgesehen sein, um den Teilnehmer nicht mit Informationen zu überlasten.

Der zweite Anzeigebereich S2 kann vollständig oder teilweise innerhalb des ersten Anzeigebereichs S1 angeordnet sein. Weiterhin sind die Begrenzungen beider Anzeigenbereiche S1,S2 nicht vorgegeben. Die beiden Anzeigebereiche S1,S2 sind folglich im weitesten Sinne als logische Kategorien zu verstehen, d.h. als z.B. von einem Softwareprozess verwaltete Ausgabemuster, die während eines Ablaufs des Softwareprozesses in ihrer Größe und in ihrer Abgrenzung zueinander variieren.

## Patentansprüche

1. Verfahren zur flexiblen Definition graphischer Informationen für eine Anzeige an einer Ausgabeeinheit (AE) eines von einer Kommunikationseinrichtung (PBX) gesteuerten Kommunikationsendgeräts (KE), umfassend folgende Schritte:
- Definition eines ersten Anzeigebereichs (S1) auf der Ausgabeeinheit (AE) zur Darstellung herkömmlicher Teilnehmerinformationen, deren Inhalte durch die Kommunikationseinrichtung (PBX) und/oder das Kommunikationsendgerät (KE) fest vorgegeben sind;
- Definition eines zweiten Anzeigebereichs (S2) auf der Ausgabeeinheit (AE);
- Speicherung von graphischen Informationen für den zweiten Anzeigenbereich (S2) in der Kommunikationseinrichtung (PBX), wobei die Informationen frei konfigurierbar sind;
- Übertragung der Informationen von der Kommunikationseinrichtung (PBX) an das stationäre Kommunikationsendgerät (KE);
- Darstellung der graphischen Information im zweiten Anzeigebereich (S2);
**dadurch gekennzeichnet,**
**dass** Inhalte des zweiten Anzeigenbereichs (S2) abhängig von einer Prioritätensteuerung dargestellt werden;
wobei abhängig von vermittlungstechnischen Zuständen eine Darstellung anderer Inhalte auf dem zweiten Anzeigebereich (S2) vorgesehen ist;
wobei die Darstellung der graphischen Informationen im zweiten Anzeigebereichs (S2) stark verkleinert erfolgt oder gänzlich unterbleibt;
und **dass** eine Priorisierung der dem Bediener des Kommunikationsendgerät (KE) dargestellten Informationen zugunsten vorrangiger Informationen des ersten Anzeigebereichs (S1) zwangsläufig erfolgt;
wobei die Priorisierung durch eine vorzugsweise in der Kommunikationseinrichtung (PBX) oder im Kommunikationsendgerät (KE) angeordnete Prioritätensteuerung als Bestandteil eines die Inhalte der beiden Anzeigebereiche (S1, S2) steuernden Prozesses erfolgt.

2. Verfahren nach Anspruch 1,
**dadurch gekennzeichnet,**
**dass** das Kommunikationsendgerät (KE) ein stationäres Kommunikationsendgerät (KE) ist und von der Kommunikationseinrichtung (PBX) gesteuert wird.

3. Verfahren nach einem der Ansprüche 1 bis 2,
**dadurch gekennzeichnet,**
**dass** Abmaße des ersten und zweiten Anzeigenbereichs (S1,S2) sich teilweise oder vollständig überlappen und sich abhängig von vermittlungstechnischen Zuständen ändern.

4. Verfahren nach einem der vorhergehenden Ansprüche,
**dadurch gekennzeichnet,**
**dass** die graphischen Informationen für den zweiten Anzeigenbereich (S2) in einer dem Kommunikationsendgerät (KE) zugeordneten Speichereinheit zwischengespeichert werden.

5. Verfahren nach einem der vorhergehenden Ansprüche,
**dadurch gekennzeichnet,**
**dass** die Übertragung der graphischen Informationen für den zweiten Anzeigenbereich (S2) über einen Signalisierungsinformationen übertragenden Datenkanal (D) erfolgt.

6. Verfahren nach einem der vorhergehenden Ansprüche,
**dadurch gekennzeichnet,**
**dass** die graphische Information für den zweiten Anzeigenbereich (S2) in Form einer animierten Sequenz erfolgt.

7. Verfahren nach einem der vorhergehenden Ansprüche,
**dadurch gekennzeichnet,**
**dass** durch die Kommunikationseinrichtung (PBX) mehrere Kommunikationsendgeräte (KE) gemeinsam in gleicher Weise gesteuert werden.

8. Computerprogrammprodukt mit Programmkode zur Durchführung des Verfahrens nach einem der Ansprüche 1 bis 7, wenn das Programmprodukt auf einer der Kommunikationseinrichtung (PBX) zugeordneten Rechnereinheit abläuft.

9. Kommunikationssystem zur flexiblen Definition graphischer Informationen für eine Ausgabe an einer einem Kommunikationsendgerät (KE) zugeordneten Ausgabeeinheit (AE)
- mit einer Kommunikationseinrichtung (PBX) zur Speicherung der graphischen Information und zur Übertragung der Daten an das Kommunikationsendgerät (KE);
- mit einem an der Ausgabeeinheit (AE) definierten ersten Anzeigebereich (S1) zur Darstellung herkömmlicher Teilnehmerinformationen, deren Inhalte durch die Kommunikationseinrichtung (PBX) und/oder das Kommunikationsendgerät (KE) fest vorgegeben sind;
- mit einem an der Ausgabeeinheit (AE) definierten reservierten zweiten Anzeigebereichs (S2) zur Anzeige von auf der Kommunikationseinrichtung (PBX) einstellbaren graphischen Informationen welche an das Kommunikationsendgerät (KE) zur Anzeige übermittelt werden;
**gekennzeichnet durch**
eine vorzugsweise in der Kommunikationseinrichtung (PBX) oder im Kommunikationsendgerät (KE) angeordnete Prioritätensteuerung als Bestandteil eines die Inhalte der beiden Anzeigebereiche (S1,S2) steuernden Prozesses, die konfiguriert ist, um Abhängig von vermittlungstechnischen Zuständen eine Darstellung anderer Inhalte auf dem zweiten Anzeigebereich (S2) vorzusehen;
wobei die Darstellung der graphischen Information im zweiten Anzeigebereich (S2) stark verkleinert erfolgt oder gänzlich unterbleibt, wobei eine Priorisierung der dem Bediener des Kommunikationsendgerät (KE) dargestellten Informationen zugunsten einer vorrangigen- Informationen des ersten Anzeigebereichs (S1) zwangsläufig erfolgt , indem Inhalte des zweiten Anzeigenbereichs (S2) abhängig von einer Prioritätensteuerung dargestellt werden.

## Claims

1. A method for the flexible definition of graphic information for display on an output unit (AE) of a communication terminal (KE) which is controlled by a communication device (PBX), comprising the following steps:
- defining a first display region (S1) on the output unit (AE) for displaying customary subscriber information, the content of which is specified by the communication device (PBX) and/or the communication terminal (KE);
- defining a second display region (S2) on the output unit (AE);
- storing graphic information of any desired configuration for the second display region (S2) in the communication device (PBX);
- transmitting the information from the communication device (PBX) to the stationary communication terminal (KE); and
- displaying the graphic information in the second display region (S2);
**characterized in that**
the display of content in the second display region (S2) is determined by a priority controller;
wherein other content may be displayed in the second display region (S2) depending on the switching state; and
wherein the graphic information is displayed miniaturized in the second display region (S2) or is omitted entirely;
and **in that** the information that is displayed to the operator of the communication terminal (KE) is obligatorily prioritized to favor more important information in the first display region (S1);
wherein prioritization is carried out by means of a priority controller, preferably located in the communication device (PBX) or in the communication terminal (KE), as a component of a process for controlling the content of the two display regions (S1, S2).

2. The method according to claim 1, **characterized in that** the communication terminal (KE) is a stationary communication terminal and is controlled by the communication device (PBX).

3. The method according to any of claims 1 to 2, **characterized in that** the dimensions of the first and second display regions (S1, S2) partially or fully overlap, and change depending upon the switching state.

4. The method according to any of the preceding claims, **characterized in that** the graphic information for the second display region (S2) is stored temporarily in a storage unit associated with the communication terminal (KE).

5. The method according to any of the preceding claims, **characterized in that** the graphic information for the second display region (S2) is transmitted via a data channel (D) for transmitting signaling information.

6. The method according to any of the preceding claims, **characterized in that** the graphic information for the second display region (S2) is in the form of an animated sequence.

7. The method according to any of the preceding claims, **characterized in that** a plurality of communication terminals (KE) are controlled jointly in the same manner by means of the communication device (PBX).

8. A computer program product comprising program codes for executing the method according to any of claims 1 to 7 when the program product is running on a computer unit associated with the communication device (PBX).

9. A communication system for the flexible definition of graphic information for display on an output unit (AE) associated with a communication terminal (KE), said system comprising
- a communication device (PBX) for storing the graphic information and for transmitting the data to the communication terminal (KE);
- a first display region (S1) defined on the output unit (AE) for displaying customary subscriber information, the content of which is specified by the communication device (PBX) and/or the communication terminal (KE);
- a reserved second display region (S2), defined on the output unit (AE), for displaying graphic information, which may be specified in the communication device (PBX) and which are transmitted to the communication terminal (KE) for display;
**characterized by**
a priority controller, preferably located in the communication device (PBX) or in the communication terminal (KE) as a component of a process for controlling the content of the two display regions (S1, S2), and configured to provide a display of other content in the second display region (S2), depending on the switching state;
wherein the graphic information is displayed miniaturized in the second region (S2) or is omitted entirely, and the information that is displayed to the operator of the communication terminal (KE) is obligatorily prioritized to place more important information in the first display region (S1), with the display of content in the second display region (S2) being determined by a priority controller.

## Revendications

1. Procédé pour la définition flexible d'informations graphiques pour un affichage sur une unité de sortie (AE) d'un terminal de communication (KE) commandé par un système de communication (PBX), comportant les étapes suivantes :
- définition d'une première zone d'affichage (S1) sur l'unité de sortie (AE) pour la représentation d'informations d'abonné usuelles dont les contenus sont prédéfinis de manière fixe par le système de communication (PBX) et/ou par le terminal de communication (KE) ;
- définition d'une seconde zone d'affichage (S2) sur l'unité de sortie (AE) ;
- stockage d'informations graphiques pour la seconde zone d'affichage (S2) dans le système de communication (PBX), les informations étant librement configurables ;
- transmission des informations par le système de communication (PBX) au terminal de communication stationnaire (KE) ;
- représentation de l'information graphique dans la seconde zone d'affichage (S2) ;
**caractérisé en ce que**
des contenus de la seconde zone d'affichage (S2) sont représentés en fonction d'une commande de priorité ;
une représentation d'autres contenus sur la seconde zone d'affichage (S2) étant prévu en fonction d'états techniques de communication ;
la représentation des informations graphiques dans la seconde zone d'affichage (S2) étant effectuée d'une manière fortement réduite ou n'ayant pas lieu du tout ;
et **en ce qu'**une priorisation des informations représentées à l'utilisateur du terminal de communication (KE) est effectuée inévitablement en faveur d'informations prioritaires de la première zone d'affichage (S1) ;
la priorisation étant effectuée par une commande de priorité, disposée de préférence dans le système de communication (PBX) ou dans le terminal de communication (KE), en tant que partie intégrante d'un processus commandant les contenus des deux zones d'affichage (S1, S2).

2. Procédé selon la revendication 1,
**caractérisé en ce que**
le terminal de communication (KE) est un terminal de communication stationnaire (KE) et est commandé par le système de communication (PBX).

3. Procédé selon l'une quelconque des revendications 1 à 2,
**caractérisé en ce que**
des dimensions des première et seconde zones d'affichage (S1, S2) se chevauchent partiellement ou intégralement et se modifient en fonction d'états techniques de communication.

4. Procédé selon l'une quelconque des revendications précédentes,
**caractérisé en ce que**
les informations graphiques pour la seconde zone d'affichage (S2) sont stockées provisoirement dans une unité de stockage associée au terminal de communication (KE).

5. Procédé selon l'une quelconque des revendications précédentes,
**caractérisé en ce que**
la transmission des informations graphiques pour la seconde zone d'affichage (S2) est effectuée par le biais d'un canal de données (D) transmettant des informations de signalisation.

6. Procédé selon l'une quelconque des revendications précédentes,
**caractérisé en ce que**
l'information graphique pour la seconde zone d'affichage (S2) est effectuée sous forme d'une séquence animée.

7. Procédé selon l'une quelconque des revendications précédentes,
**caractérisé en ce que**
plusieurs terminaux de communication (KE) sont commandés ensemble d'une manière identique par le système de communication (PBX).

8. Produit-programme d'ordinateur avec un code de programme pour l'exécution du procédé selon l'une quelconque des revendications 1 à 7, lorsque le produit-programme se déroule sur une unité de calcul associée au système de communication (PBX).

9. Système de communication pour la définition flexible d'informations graphiques pour une sortie sur une unité de sortie (AE) associée à un terminal de communication (KE)
- avec un système de communication (PBX) pour le stockage de l'information graphique et pour la transmission des données au terminal de communication (KE) ;
- avec une première zone d'affichage (S1), définie sur l'unité de sortie (AE), pour la représentation d'informations d'abonné usuelles dont les contenus sont prédéfinis de manière fixe par le système de communication (PBX) et/ou par le terminal de communication (KE) ;
- avec une zone d'affichage (S2) réservée, définie sur l'unité de sortie (AE), pour l'affichage d'informations graphiques, réglables sur le système de communication (PBX), qui sont transmises au terminal de communication (KE) aux fins d'affichage ;
**caractérisé en ce que**
une commande de priorité, disposée de préférence dans le système de communication (PBX) ou dans le terminal de communication (KE), en tant que partie intégrante d'un processus commandant les contenus des deux zones d'affichage (S1, S2), qui est configurée pour prévoir, en fonction d'états techniques de communication, une représentation d'autres contenus sur la seconde zone d'affichage (S2) ;
la représentation de l'information graphique dans la seconde zone d'affichage (S2) étant effectuée d'une manière fortement réduite ou n'ayant pas lieu du tout, une priorisation des informations représentées à l'utilisateur du terminal de communication (KE) étant effectuée inévitablement en faveur d'informations prioritaires de la première zone d'affichage (S1) du fait que des contenus de la seconde zone d'affichage (S2) sont représentés en fonction d'une commande de priorité.
